# EUROPÄISCHE PATENTSCHRIFT

(11) **EP 2 257 580 B1**
(45) Veröffentlichungstag und Bekanntmachung des Hinweises auf die Patenterteilung: **07.03.2012**
(21) Anmeldenummer: 09723124.5
(22) Anmeldetag: 18.03.2009
(51) Int. Cl.: C08G 18/18, B29C 44/32, C08J 9/40

(54) **POLYURETHANSYSTEME FÜR DIE HERSTELLUNG VON POLYURETHAN-SANDWICHTEILEN BEI GERINGEN FORMTEMPERATUREN**
POLYURETHANE SYSTEMS FOR PRODUCING POLYURETHANE SANDWICH PARTS AT LOW MOLDING TEMPERATURES
SYSTÈMES POLYURÉTHANNE POUR LA FABRICATION DE PIÈCES SANDWICHS EN POLYURÉTHANNE À DES TEMPÉRATURES DE MOULE FAIBLES

(30) Priorität: 20.03.2008 EP 08153054
(43) Veröffentlichungstag der Anmeldung: 08.12.2010
(73) Patentinhaber: BASF SE, 67056 Ludwigshafen (DE)
(72) Erfinder: FADER, Michael, 49074 Osnabrück (DE)
(86) Internationale Anmeldenummer: PCT/EP2009/053171
(87) Internationale Veröffentlichungsnummer: WO 2009/115540

(56) Entgegenhaltungen:
- EP-A1- 1 215 223
- DE-A1- 3 703 398
- US-A- 5 798 533
- US-A1- 2003 144 372

## Beschreibung

Die vorliegende Erfindung betrifft die Verwendung eines Polyurethansystems, enthaltend (a) Polyisocyanate, (b) mindestens eine mit Isocyanat reaktive Verbindung, (c) mindestens ein Carbonsäuresalz eines Aminkatalysators, wobei, bezogen auf ein Äquivalent Amin des Aminkatalysators, 0,5 bis 1,5 Äquivalente Säuregruppen einer Carbonsäure enthalten sind, (d) gegebenenfalls weitere Katalysatoren, (e) gegebenenfalls einen Reaktivkettenverlängerer mit zumindest zwei gegenüber Isocyanaten reaktiven Gruppen, wobei zumindest eine gegenüber Isocyanaten reaktive Gruppe eine freie, primäre NHrGruppe ist, und (f) gegebenenfalls weitere Additive, zur Herstellung von Polyurethan-Sandwichteilen. Weiter betrifft die vorliegende Erfindung ein Verfahren zur Herstellung von Polyurethan-Sandwichteilen sowie die nach dem erfindungsgemäßen Verfahren erhaltenen Polyurethan-Sandwichteile.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemä-βen Gegenstandes nicht nur in der jeweils angegebenen Kombination, sondern auch in anderen Kombinationen verwendbar sind, ohne den Rahmen der Erfindung zu verlassen.

Polyurethan-Sandwichteile sind seit langem bekannt. Diese werden hergestellt, in dem eine Kernschicht mit einer Verstärkungsschicht bedeckt wird. Auf dieses so genannte Sandwich-Halbzeug wird eine Polyurethanreaktionsmischung einseitig, vielfach auch zweiseitig, vorzugsweise durch Aufsprühen, aufgebracht. Anschließend wird das mit der Polyurethanreaktionsmischung bedeckte Teil, das Roh-Sandwichteil, in eine Form gegeben, worin dem Sandwich-Halbzeug in einem thermischen Pressverfahren durch verpressen eine bestimmte Form gegeben wird und die Polyurethanreaktionsmischung zum Polyurethan ausgehärtet wird. Dabei wird bei dem Verpressen die Verstärkungsschicht gestaucht. Die Stauchung kann dabei in einem weiten Bereich variiert werden und von wenigen zehntel Millimetem bis zu einer Stauchung auf wenige Prozent der Ausgangsdicke in einigen Teilbereichen erfolgen. Dann wird das so erhaltene Polyurethan-Sandwichteil entformt. Dabei erfolgt die Gestaltung der Außenkontur über ein Abquetschen des Sandwichpakets im formgebenden Werkzeug.

Damit eine dreidimensionale Formgebung möglich ist, darf das Aushärten der Polyurethanreaktionsmischung erst in der Form erfolgen. Insbesondere im Bereich der Ränder solcher komprimierter Bereiche kann die Kernschicht durch Polyurethan nur abgedichtet werden, wenn nach der Kompression noch ausreichend fließfähige Polyurethanreaktionsmischung vorhanden ist, um diese Bereiche abzudecken. Solche Verfahren sind beispielsweise in der Broschüre "PUR - Faserverbundwerkstoffe für den Leichtbau im Fahrzeuginnenraum der Bayer AG Leverkusen (Bestellnummer: PU 52248) oder "Baypreg F - PUR plus Natur im Automobil, Verbundwerkstoffe aus Polyurethan" der Bayer AG Leverkusen offenbart.

Problematisch am bekannten Verfahren ist, dass die Formgebung bei Formtemperaturen von ca. 120 bis 140 °C durchgeführt werden muss, um die für industrielle Zwecke nötigen kurzen Entformzeiten zu gewährleisten, ohne die für die Herstellung des Roh-Sandwichteils nötige Verarbeitungszeit des Polyurethansystems, die so genannte "offene Zeit' zu verkürzen oder die nötige Fließfähigkeit der Polyurethanreaktionsmischung in der Form zu beeinträchtigen. Diese hohen Formtemperaturen führen aber zu einem hohen Energieverbrauch bei der Herstellung des Polyurethan-Sandwichteils, außerdem ist eine direkte Kaschierung nur mit sehr teuren, hitzebeständigen Dekormaterialien möglich.

Carbonsäuresalze eines Aminkatalysators zur Herstellung von Polyurethanformschäumen werden offenbart in US 2003/0144372.

In EP 1 215 223 werden Polyurethanverbundelemente beschrieben wobei Verbindungen einer anorganischen Säure als Polyurethankatalysatorinhibitor verwendet werden.

Aufgabe der vorliegenden Erfindung war die Verringerung des Energieverbrauchs und Verbesserung des direkten Kaschierverhaltens bei der Herstellung von Polyurethan-Sandwichteilen, ohne eine Verkürzung der offenen Zeit oder einer Verlängerung der Entformzeiten im Vergleich zu bekannten Verfahren.

Die erfindungsgemäße Aufgabe wird gelöst durch die Verwendung eines Polyurethansystems, enthaltend (a) Polyisocyanate, (b) mindestens eine mit Isocyanat reaktive Verbindung, (c) mindestens ein Carbonsäuresalz eines Aminkatalysators, wobei, bezogen auf ein Äquivalent Amin des Aminkatalysators, 0,5 bis 1,5 Äquivalente Säuregruppen einer Carbonsäure enthalten sind, (d) gegebenenfalls weitere Katalysatoren, (e) gegebenenfalls einen Reaktivkettenverlängerer mit zumindest zwei gegenüber Isocyanaten reaktiven Gruppen, wobei zumindest eine gegenüber Isocyanaten reaktive Gruppe eine freie, primäre NHrGruppe ist, und (f) gegebenenfalls weitere Additive, zur Herstellung von Polyurethan-Sandwichteilen.

Dabei ist im Rahmen der Erfindung unter einem Polyurethansystem ein System, bestehend aus mindestens zwei Komponenten, zu verstehen, wobei beim Vermischen der Komponenten die erfindungsgemäße Polyurethanreaktionsmischung erhalten wird. Dabei werden häufig die Komponenten (b) bis (f) zu einer sogenannten Polyolkomponente vereinigt und die Komponente (a) als Isocyanatkomponente bezeichnet.

Als Polyisocyanate werden vorzugsweise aromatische Isocyanate verwendet. Vorzugsweise werden aromatische Isocyanate der allgemeinen Formel R(NCO)_{z} eingesetzt, wobei R ein polyvalenter organischer Rest ist, der einen Aromaten aufweist, und z eine ganze Zahl von mindestens 2 ist. Beispiele hierfür sind 4,4'-Diisocyanatobenzol, 1,3-DÜsocyanato-o-xylol, 1,3-DÜsocyanato-p-xylol, 1,3-Diisocyanato-m- xylol, 2,4-Diisocyanato-1-chlorobenzol, 2,4-Diisocyanato-1-nitro-benzol, 2,5-Diisocyanato-1-nitrobenzol, m-Phenylendüsocyanat, p-Phenylendüsocyanat, 2,4-Toluoldiisocyanat, 2,6-Toluoldüsocyanat, Mischungen aus 2,4- and 2,6-Toluoldiisocyanat, 1,5-Naphthalindiisocyanat, 1-Methoxy-2,4-phenylendiisocyanat, 4,4'-Diphenylmethandiisocyanat, 2,4'-Diphenylmethandiisocyanat, 4,4'-Biphenylendüsocyanat, 3,3'-Dimethyl-4,4'-diphenylmethandiisocyanat, und 3,3'-Dimethyldiphenylmethan-4,4'-diisocyanat; Triisocyanate, wie 4,4',4"-Triphenylmethantrüsocyanat und 2,4,6-Toluoltriisocyanat, und Tetraisocyanate, wie 4,4'-Dimethyl-2,2'-5,5'-diphenylmethantetraisocyanat. Besonders bevorzugt sind Toluoldiisocyanate, 2,4'-Diphenylmethandiisocyanat, 4,4 '-Diphenyl methandiisocyanat, Polymethylenpolyphenylenpolyisocyanat, sowie Derivate und Mischungen davon.

Bevorzugt verwendet werden höherkernige Isocyanate verwendet, besonders bevorzugt Polymethylenpolyphenylenpolyisocyanat, auch als Polymer-MDI bezeichnet. Dabei können diese auch vor Verwendung mit Polyetherolen oder Polyesterolen zu Isocyanatprepolymeren prepolymerisiert werden, um spezielle Eigenschaften einzustellen. Weiter ist die Verwendung von Roh-MDI möglich.

Insbesondere werden Umsetzungsprodukte von Polymer-MDI und Polyesterolen, wie unter (b) beschrieben, als modifiziertes, multivalentes Isocyanat eingesetzt. Die Isocyanatkomponente weißt dabei Funktionalitäten von 1,2 bis 3,0, bevorzugt 1,5 bis 3,0, besonders bevorzugt 2,0 bis 2,8, auf.

Als mit Isocyanat reaktive Verbindung (b) kann jede bei der Polyurethanherstellung verwendbare Verbindung mit mindestens zwei gegenüber Isocyanaten reaktiven Wassertoffatomen eingesetzt werden. Vorzugsweise wird als mit Isocyanat reaktive Verbindung (b) ein Polyetherpolyol, ein Polyesterpolyol, eine aminfunktionalisierte Verbindungen oder Mischungen daraus eingesetzt. Besonders bevorzugt sind Polyetherpolyole.

Geeignete Polyetherpolyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat, oder Kaliumisopropylat als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid und Borfluorid-Etherat, oder Bleicherde als Katalysatoren aus einem oder mehreren Alkylenoxiden mit 2 bis 4 Kohlenstoffatomen im Alkylenrest hergestellt werden. Weiter können als Katalysatoren auch Multimetallcyanidverbindungen, sogenannte DMC-Katalysatoren, eingesetzt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethan.

Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- bis achtwertige Alkohole, wie Ethandiol, Propandiol-1,2 und - 1,3, Diethylenglykol, Dipropylenglykol, Butandiol-1,4, Hexandiol-1,6, Glycerin, Trimethylol-propan, Pentaerythrit, Glucose, Fructose und Saccharose.

Die Polyetherpolyole, vorzugsweise Polyoxyethylen-, Polyoxypropylen- und Polyoxypropylen-polyoxyethylenpolyole, besitzen eine gemittelte Funktionalität von 1,5 bis 5,0, bevorzugt von 1,8 bis 4,2 und insbesondere von 2,0 bis 3,5 und zahlengemittelte Molekulargewichte von vorzugsweise 32 bis 1500, besonders bevorzugt 60 bis 1000 und insbesondere 60 bis 800.

Die unterschiedlichen Funktionalitäten werden dabei bevorzugt durch die Verwendung unterschiedlicher Starter erhalten.

Als Polyole eignen sich ferner polymermodifizierte Polyole, vorzugsweise polymermodifizierte Polyesterole oder Polyetherole, besonders bevorzugt Pfropf-Polyetherole. Hierbei handelt es sich um ein sogenanntes Polymerpolyol, welches üblicherweise einen Gehalt an, bevorzugt thermoplastischen, Polymeren von 5 bis 50 Gew.-%, bevorzugt 10 bis 45 Gew.-%, besonders bevorzugt 15 bis 25 Gew.-% und insbesondere 18 bis 22 Gew.-%, aufweist. Diese Polymerpolyesterole sind beispielsweise in EP-A-250 351 beschrieben und werden üblicherweise durch radikalische Polymerisation von geeigneten olefinischen Monomeren, beispielsweise Styrol, Acrylnitril, Acrylaten und/oder Acrylamid, stehen im allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol.

In einer bevorzugten Ausführungsform werden als Monomere Acrylnitril, Styrol, insbesondere ausschließlich Styrol verwendet. Die Monomere werden gegebenenfalls in Gegenwart weiterer Monomere, eines Makromers, eines Moderators und unter Einsatz eines Radikal-Initiators, meist Azo- oder Peroxidverbindungen, in einem Polyesterol als kontinuierlicher Phase polymerisiert.

Während der radikalischen Polymerisation werden die Makromere mit in die Copolymerkette eingebaut. Dadurch bilden sich Blockcopolymere mit einem Polyester- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 15 Gew.-%, bezogen auf das Gesamtgewicht der zur Herstellung des Polymerpolyols eingesetzten Monomere.

Vorzugsweise ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b), in einer Menge von 30 bis 90 Gew.-%, bevorzugt von 55 bis 80 Gew.-% enthalten sein. Besonders bevorzugt handelt es sich bei dem Polymerpolyol um Polymerpolyesterol oder Polyetherol.

Als Carbonsäuresalz eines Aminkatalysators (c) können Carbonsäuresalze aller zur Polyurethanherstellung üblichen basischen Aminkatalysatoren eingesetzt werden. Dabei werden die Carbonsäuresalze der basischen Aminkatalysatoren erhalten, indem die Aminkatalysatoren mit Carbonsäuren gemischt werden. Dies kann in einem separaten Schritt, gegebenenfalls unter Verwendung eines Lösungsmittels, oder durch Zugabe der Säure und des basischen Aminkatalysators zur Polyolkomponente erfolgen.

Vorzugsweise wird das Carbonsäuresalz des Aminkatalysators erhalten, in dem in einem separaten Schritt Carbonsäure und basischer Aminkatalysator, gegebenenfalls unter Erwärmen, gemischt werden. Vorzugsweise wird dabei ein Alkohol, besonders bevorzugt ein zwei- oder dreiwertiger Alkohol mit einem Molekulargewicht von kleiner 120 g/mol, insbesondere Ethylenglycol, als Lösungsmittel verwendet. Das so gebildete Carbonsäuresalz eines Aminkatalysators kann dann in einem weiteren Schritt mit mindestens der Komponente (b) sowie gegebenenfalls einer der Komponenten (d), (e) und (f) zur Polyolkomponente vereinigt werden.

Basische Aminkatalysatoren werden beispielsweise im "Kunststoffhandbuch, Band 7, Polyurethane", Carl Hanser Verlag, 3. Auflage 1993, Kapitel 3.4.1 beschrieben. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, N,N-bis(3-Dimethylaminopropyl)-N-isopropanolamin, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Trüsopropanolamin, N-Methyl- und N-Ethyl-diethanolamin, N,N-bis(3-Dimethylaminopropyl)-N-isopropanolamin und Dimethylethanolamin. Insbesondere werden dabei basische Aminkatalysatoren eingesetzt, die mindestens eine, bevorzugt genau eine, gegenüber Isocyanaten reaktive Gruppe aufweist, wie N,N-bis(3-Dimethylaminopropyl)-N-isopropanolamin. Die Katalysatoren können einzeln oder als Mischungen verwendet werden.

Als Carbonsäuren werden vorzugsweise solche eingesetzt, die ein Molekulargewicht von kleiner 300 g/mol aufweisen. Besonders bevorzugt werden dabei gesättigte und ungesättigte aliphatische Monocarbonsäuren mit 1 bis 18 Kohlenstoffatomen, wie Ameisensäure, Essigsäure, Cyanessigsäure oder 2-Ethylhexansäure, aromatische Carbonsäuren, aliphatische, gesättigte und ungesättigte Dicarbonsäuren mit 2 bis 16 Kohlenstoffatomen, oder Tricarbonsäuren oder Mischungen daraus eingesetzt. Auch können Derivate der oben genannten Carbonsäuren verwendet werden. Weiter bevorzugt werden als Carbonsäuren Dicarbonsäuren der allgemeinen Formel HOOC-(CH₂)ₙ-COOH eingesetzt, wobei n für eine ganze Zahl von 2 bis 14 steht. Solche Dicarbonsäuren sind im Allgemeinen weniger korrosiv. Insbesondere wird als Carbonsäure Adipinsäure verwendet.

Das Verhältnis aus Säure und Aminkatalysator wird dabei so gewählt, dass bezogen auf ein Äquivalent Amin des Aminkatalysators, 0,5 bis 1,5, bevorzugt 0,7 bis 1,3, besonders bevorzugt 0,90 bis 1,10 und insbesondere 0,95 bis 1,05 Äquivalente Säuregruppen einer Carbonsäure enthalten sind.

Die Carbonsäuresalze eines Aminkatalysators (c) können beispielsweise in einer Konzentration von 0,001 bis 10 Gew.-%, bevorzugt 0,05 bis 5 Gew.-% und besonders bevorzugt 0,05 bis 2 Gew.-%, bezogen auf das Gewicht der Komponenten (b) bis (f), eingesetzt werden.

Als weitere Katalysatoren (d) können beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(III)-neodecanoat, Bismut-2-etyhlhexanoat und Bismut-octanoat oder Mischungen in eingesetzt werden. Vorzugsweise werden keine weiteren Katalysatoren (d) eingesetzt.

Als Reaktivkettenverlängerer (e) können Substanzen eingesetzt werden, die zwei gegenüber Isocyanaten reaktive Gruppen aufweisen, wobei die Substanzen zumindest eine freie primäre NHrGruppe aufweist. Diese Substanzen beschleunigen die Polyurethanreaktion. Die weitere gegenüber Isocyanat reaktive Gruppe kann beispielsweise ausgewählt sein aus einer primären Aminogruppe, einer Alkoholgruppe oder einer Thiolgruppe. Als Reaktivkettenverlängerer (e) können beispielsweise aliphatische oder aromatische Amine verwendet werden. Dabei können die Reaktivkettenverlängerer (e) einzeln oder in Form von Mischungen eingesetzt werden.

In einer besonders bevorzugten Ausführungsform werden als Reaktivkettenverlängerer (e) vorzugsweise aromatische Diamine, insbesondere Toluylendiamine oder Derivate davon, wie 3,5-Diethyl-toluylen-2,4-diamin, eingesetzt.

In einer weiteren bevorzugten Ausführungsform ist der Reaktivkettenverlängerer (e) aliphatisch und weist zwischen den zwei gegenüber Isocyanaten reaktiven Gruppen zumindest zwei Alkylengruppen mit jeweils einem oder zwei Kohlenstoffatomen auf, wobei die Alkylengruppen jeweils von einem Heteroatom getrennt werden. Insbesondere handelt es sich bei den zwei gegenüber Isocyanaten reaktiven Gruppen um Aminogruppen. Vorzugsweise ist das Molekulargewicht des Reaktivkettenverlängerers (e) in dieser bevorzugten Ausführungsform zwischen 100 und 400 g/mol, besonders bevorzugt zwischen 100 und 200 g/mol und insbesondere zwischen 100 und 150 g/mol. Werden aliphatische Reaktivkettenverlängerer eingesetzt, wird insbesondere Triethylenglykoldiamin als Reaktivkettenverlängerer (e) eingesetzt.

Der Anteil der Reaktivkettenverlängerer an der Polyolkomponente beträgt vorzugsweise 0,1 bis 10 Gew.-%, besonders bevorzugt 0,3 bis 8 Gew.-%, weiter bevorzugt 0,5 bis 5 Gew.-% und insbesondere 1,5 bis 4,0 Gew.-%, bezogen auf das Gesamtgewicht der Komponenten (b) bis (f).

Neben den Reaktivkettenverlängerern (e) können gegebenenfalls auch Reaktiv-Vernetzer eingesetzt werden, die zumindest eine freie primäre NHrGruppe aufweisen, die Polyurethanreaktion beschleunigen und eine Funktionalität größer 2 aufweisen.

Neben den erfindungsgemäßen Reaktivkettenverlängerem (e) können weitere übliche Kettenverlängerer eingesetzt werden. Diese sind beispielsweise Diole, besonders bevorzugt sind Monoethylenglykol und Butandiol. Ganz besonders bevorzugt eingesetzt werden im Rahmen der Erfindung Mischungen aus einem erfindungsgemäßen Reaktivkettenverlängerer und einem Kettenverlängerer, bestehend aus einem Diol.

Als weitere Additive (f) können Treibmittel, Additive zur Thixotropierung, Füllstoffe, Antioxidantien, Farbstoffe, Pigmente, optische Aufheller und Stabilisatoren gegen Wärme, Licht und/oder UV-Strahlung, Weichmacher oder oberflächenaktive Substanzen eingesetzt werden.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart.

Als Treibmittel können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone und/oder Acetale.

Vorzugsweise sind die erfindungsgemäßen Polyurethansysteme Wasser getrieben. Der Anteil an Wasser, beträgt bei wassergetriebenen Polyurethansystemen 0.1 bis 2.0 Gew.-%, besonders bevorzugt 0.2 bis 1.5 Gew-%, insbesondere 0.4 bis 1.1 Gew-% bezogen auf das Gesamtgewicht der Komponenten (b) bis (f).

Beispiele für Antioxidantien, Stabilisatoren gegen Wärme, Licht und/oder UV-Strahlung sind Stabilisatoren aus der Gruppe der sterisch gehinderten Phenole, wie zum Beispiel Cyanox 1790 ® der Firma Cytec Industries INC, HALS-Stabilisatoren (hindered amine light stabilizer), Triazine, Benzophenone und der Benzotriazole. Beispiele für Pigmente und Mattierungsmittel sind Titandioxid, Magnesiumstearat, Silikonöl, Zinkoxid und Bariumsulfat. Beispiele für Farbstoffe sind saure Farbstoffe und Dispersionsfarbstoffe.

Weiter betrifft die vorliegende Erfindung ein Verfahren zur Herstellung von Polyurethan-Sandwichteilen, wobei man (i) eine Kernschicht und zumindest eine Verstärkungsfaserschicht vorlegt, (ii) eine Polyurethanreaktionsmischung auf die Verstärkungsfaserschicht aufträgt, (iii) das Teil aus (ii) in eine Form gibt und in der Form die Polyurethanreaktionsmischung aushärtet, (iv) das Formteil aus der Form entnimmt und gegebenenfalls nacharbeitet, wobei die Polyurethanreaktionsmischung erhältlich ist durch Vermischen der Komponenten eines erfindungsgemäßen Polyurethansystems.

Als Material für die Kernschicht werden dabei bevorzugt thermoformbare Polyurethan-Schaumstoffe sowie Papier-, Metall-, oder Kunststoffwaben, eingesetzt. Als Verstärkungsfaserschicht können vorzugsweise Glasfasermatten, Glaserfaservliese, Glasfaserwirrlagen, Glasfasergewebe, geschnittene oder gemahlene Glas- oder MineralFasern, Naturfasermatten und -gewirke, geschnittene Naturfasern und Fasermatten, - vliese und -gewirke auf Basis von Polymer-, Kohlenstoff- bzw. Aramidfasern sowie deren Mischungen eingesetzt werden. Dabei kann die Verstärkungsfaserschicht auf eine Seite der Kernschicht als auch auf beiden Seiten der Kernschicht aufgebracht werden.

Auf das so erhaltene Sandwich-Halbzeug wird Polyurethanreaktionsmischung, erhältlich durch vermischen der Komponenten (a) bis (f) eines erfindungsgemäßen Polyurethansystems, aufgebracht. Dies geschieht vorzugsweise durch Aufsprühen der Polyurethanreaktionsmischung. Vorzugsweise weist die erfindungsgemäße Polyurethanreaktionsmischung eine Viskosität bei 25 °C von 280 bis 3000 mPas, besonders bevorzugt von 350 bis 2000 mPas, direkt nach dem Vermischen auf, ca. 5-10 Sekunden nach dem Vermischen steigt die Viskosität stark an.

Zur Herstellung der Polyurethanreaktionsmischung werden die einzelnen Komponenten des erfindungsgemäßen Polyurethansystems so vermischt, dass der Isocyanatindex 80 bis 200, insbesondere 90 bis 150 beträgt. Unter dem lsocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen verstanden, nicht aber die Isocyanatgruppe selbst.

Anschließend wird das Roh-Sandwichteil in eine Form gegeben und die Polyurethanreaktionsmischung wird ausgehärtet. Dabei beträgt die Formtemperatur weniger als 110 °C. Vorzugsweise beträgt die Formtemperatur 40 bis 110 °C, bevorzugt 50 bis 100°C und besonders bevorzugt 65 bis 90 °C.

Gegebenenfalls werden die Roh-Sandwichteile zusammen mit einer Deckschicht oder einer Dekorschicht verpresst. Dabei kann die Deckschicht bzw. die Dekorschicht auf einer oder auf beiden Seiten des Polyurethan-Sandwichteils aufgebracht werden. Alternativ kann die Deckschicht bzw. die Dekorschicht nach dem Entformen des Polyurethan-Sandwichteils in einem weiteren Arbeitsschritt aufgebracht werden.

Als Dekorschicht können hierbei gegen eine Durchtränkung mit Polyurethan gesperrte Textilstoffe, kompakte oder geschäumte Kunststofffolien sowie Sprüh- oder RIM-Häute aus Polyurethan verwendet werden. Als Deckschichten können auch für Außenanwendungen geeignete, vorgeformte Materialien wie Metallfolien oder - bleche sowie kompakte thermoplastische Kunststoff-Composites aus PMMA (Polymethylmethacrylat), ASA (Acrylester modifiziertes Styrol-Acrylnitril-Terpolymer), PC (Polycarbonat), PA (Polyamid), PBT (Polybutylenterephtalat) und/oder PPO (Polyphenylenoxid) in lackierter, lackierfähig eingestellter oder eingefärbter Form verwendet werden. Als Deckschichten können ebenfalls kontinuierlich oder diskontinuierlich hergestellte Deckschichten auf Basis von Polyurethan-, Melamin-Phenol-, Phenol-Formaldehyd-, Epoxy- oder ungesättigten Polyester-Harzen verwendet werden.

Ein großer Vorteil des erfindungsgemäßen Verfahrens ist es weiter, dass durch die verringerte Formtemperatur auch temperaturempfindlichere Dekorschichten, wie PVC (Polyvinylchlorid), TPU (Thermoplastisches Polyurethan), Polyestern und automobilen Teppichmaterialien zusammen mit den Roh-Sandwichteilen verpresst werden können und nicht erst in einem nachträglichen Schritt unter Verwendung eines Klebstoffs aufgebracht werden müssen.

Die nach einem erfindungsgemäßen Verfahren hergestellten Polyurethan-Sandwichteile können beispielsweise als Strukturbauteile oder Verkleidungsteile, insbesondere in der Autoindustrie, der Möbelindustrie oder der Bauindustrie eingesetzt werden.

Gegebenfalls werden die Roh-Sandwichteile beim Verpressen über sogenannte Tauch- oder Pinchkanten getrimmt, so dass hier keine weitere Nachbearbeitung, wie Stanzen oder Fräsen mehr notwendig ist.

Insbesondere wenn Reaktivkettenverlängerer (e) eingesetzt wird, zeichnen sich erfindungsgemäße Polyurethan-Sandwichteile neben dem Vorteil der geringen Verarbeitungstemperatur durch eine verbesserte Kantenausbildung gegenüber Teilen aus, die ohne Einsatz von erfindungsgemäßen Reaktivkettenverlängerer (e) hergestellt wurden. Auch dringt die Polyurethanreaktionsmischung bei Verwendung von Reaktivkettenverlängerer (e) weniger in die Kernschicht ein, so das hier eine Materialeinsparung und ein geringeres Gewicht der Sandwichteile erreicht wird.

Auch führt die Verwendung von Reaktivkettenverlängerer (e) zu einer reduzierten Anlagenverschmutzung bei Herstellung der Polyurethan-Sandwichteile, da die Roh-Sandwichteile weniger dazu neigen abzutropfen.

Die vorliegende Erfindung soll durch folgende Beispiele verdeutlicht werden.
- Polyol 1:: Polyetherpolyol der OH-Zahl 555 ^{mg KOH}/_{g}, hergestellt durch Addition von PO an Glycerin.
- Polyol 2:: Polyetherpolyol der OH-Zahl 935 mg KOH/g, hergestellt durch Addition von EO an Trimethylolpropan.
- Polyol 3:: Polyetherpolyol der OH-Zahl 400 mg KOH/g, hergestellt durch Addition von EO/PO an Saccharose/Diethylenglycol-Mischung.
- Stabilisator:: Siliconstabilisator Tegostab^{®} B8443, GE Bayer Silicones
- Katalysator 1:: N,N-bis(3-Dimethylaminopropyl)-N-isopropanolamin
- Katalysator 2:: Adipinsäuresalz von N,N-bis(3-Dimethylaminopropyl)-N-isopropanolamin in Ethylenglycol
- Katalysator 3:: Diethyltoluoldiamin
- Farbstoff:: Isopur^{®} SU-12021/9111, ISL-Chemie
- Polyisocyanat :: Lupranat^{®} M20W, BASF SE

### Katalysator 2 wurde dabei folgendermaßen hergestellt:

In einen 5L 4-Hals-Rundkolben wurden 900 g Adipinsäure eingewogen und in 2100 g Ethylenglycol aufgeschlämmt. Das ganze wurde im Ölbad unter Rückfluss und Rühren auf 70°C erhitzt und dann langsam mit Hilfe eines Tropftrichters 1000 g N,N-bis(3-Dimethylaminopropyl)-N-isopropanolamin zugesetzt. Dabei erwärmte sich die Mischung weiter und es löste sich die bisher nur aufgeschlämmte Adipinsäure unter Reaktion im Ethylenglycol auf. Es bildete sich eine rötliche viskose Flüssigkeit.

**Rezeptur 1: (erfindungsgemäß)**

| Polyol-Komponente | | |
|---|---|---|
| Polyol 1 | 30,20 | Gew.-Teile |
| Polyol 2 | 25,00 | Gew.-Teile |
| Polyol 3 | 34,00 | Gew.-Teile |
| Stabilisator | 0,40 | Gew.-Teile |
| Wasser | 0,40 | Gew.-Teile |
| Katalysator 1 | | Gew.-Teile |
| Katalysator 2 | 4,00 | Gew.-Teile |
| Katalysator 3 | 2,00 | Gew.-Teile |
| Farbstoff | 4,00 | Gew.-Teile |

| Isocyanat-Komponente | | |
|---|---|---|
| Polyisocyanat | 200,00 | Gew.-Teile |

Das Polyolgemisch (Polyole 1 bis 3) hat eine gemittelte OH-Zahl von 600 mg KOH/g

### Rezeptur 2: (Vergleich)

| Polyol-Komponente | | |
|---|---|---|
| Polyol 1 | 35,80 | Gew.-Teile |
| Polyol 2 | 25,00 | Gew.-Teile |
| Polyol 3 | 34,00 | Gew.-Teile |
| Stabilisator | 0,40 | Gew.-Teile |
| Wasser | 0,40 | Gew.-Teile |
| Katalysator 1 | 0,40 | Gew.-Teile |
| Katalysator 2 | | |
| Farbstoff | 4,00 | Gew.-Teile |

| Isocyanat-Komponente | | |
|---|---|---|
| Polyisocyanat | 200,00 | Gew.-Teile |

Das Polyolgemisch (Polyole 1 bis 3) hat eine gemittelte OH-Zahl von 598 mg KOH/g

### Beispiel 1: (erfindungsgemäß)

Mittels einer Hochdrucksprühanlage wurden die Polyolkomponente und die Isocyanatkomponente gemäß Rezeptur 1 miteinander vermischt und auf ein vorbereitetes Sandwich-Halbzeug aufgesprüht. Dabei wurde eine 17 mm starke Expandierbare Pappwabe beidseitig mit 225 g/m² Wirrglasmatte belegt und mit - 225 g/m² PUR-Reaktionsgemisch besprüht. Dann wurde das Roh-Sandwichteil in einem 85°C heißen Formwerkzeug auf eine Bauteilstärke 15.5mm verpresst und nach 60s entformt. Nach dem Entformen wurde ein Polyurethan-Sandwichteil mit einer sehr guten Kantenausbildung, besonders in scharfkantigen Bereichen, erhalten.

### Vergleichsbeispiel 1:

Ausgehend von Rezeptur 2 wurde analog zu Beispiel 1 verfahren. Vor dem Einlegen in die Form tropft ein erheblicher Teil der aufgesprühten Reaktionsmischung vom Roh-Sandwichteil ab. Beim Entformen nach 60 s wurde ein quasi nicht ausgehärtetes Formteil erhalten.

### Vergleichsbeispiel 2:

Ausgehend von Rezeptur 2 wurde analog zu Beispiel 1 verfahren, wobei bei einer Formtemperatur von 130 °C 60 s verpresst wurde. Auch hier tropfte ein erheblicher Teil der aufgesprühten Reaktionsmischung vom Roh-Sandwichteil ab. Nach dem Entformen nach 60 s wurde ein vollständig ausgehärtetes Polyurethan-Sandwichteil mit deutlichen Fehlstellen an den Kanten erhalten.

## Patentansprüche

1. Verwendung eines Polyurethansystems, enthaltend
a) Polyisocyanate
b) mindestens eine mit Isocyanat reaktive Verbindung,
c) mindestens ein Carbonsäuresalz eines Aminkatalysators,
d) gegebenenfalls weitere Katalysatoren,
e) gegebenenfalls einen Reaktivkettenverlängerer mit zumindest zwei gegenüber Isocyanaten reaktiven Gruppen, wobei zumindest eine gegenüber Isocyanaten reaktive Gruppe eine freie, primäre NH₂-Gruppe ist, und
f) gegebenenfalls weitere Additive
zur Herstellung von Polyurethan-Sandwichteilen, wobei die Polyurethan-Sandwichteile eine Kernschicht enthalten und die Polyurethansandwichteile durch Kompression der Kernschicht eine dreidimensionale Form erhalten und
wobei, bezogen auf ein Äquivalent Amin des Aminkatalysators, 0,5 bis 1,5 Äquivalente Säuregruppen einer Carbonsäure enthalten sind.

2. Verwendung nach Anspruch 1, **dadurch gekennzeichnet, dass** die Carbonsäure eine Dicarbonsäure der allgemeinen Formel HOOC-(CH₂)ₙ-COOH ist, wobei n eine ganze Zahl von 2 bis 14 ist.

3. Verwendung nach Anspruch 2, **dadurch gekennzeichnet, dass** die Carbonsäure Adipinsäure ist.

4. Verwendung nach einem der Ansprüche 1 bis 3, **dadurch gekennzeichnet, dass** der Aminkatalysators c) mindestens eine mit Isocyanat reaktive Gruppe aufweist.

5. Verwendung nach einem der Ansprüche 1 bis 3, **dadurch gekennzeichnet, dass** ein Reaktivkettenverlängerer e) mit 0,1 bis 10 Gew.-%, bezogen auf das Gesamtgewicht der Komponenten b) bis f) im Polyurethansystem enthalten ist.

6. Verfahren zur Herstellung von Polyurethan-Sandwichteilen, wobei man
i. eine Kernschicht und zumindest eine Verstärkungsfaserschicht vorlegt,
ii. eine Polyurethanreaktionsmischung auf die Verstärkungsfaserschicht aufträgt,
iii. das Teil aus ii. in eine Form gibt, dem Teil aus ii durch Verpressen der Kernschicht in der Form eine dreidimensionale Form gibt und die Polyurethanreaktionsmischung aushärtet
iv. das Formteil aus der Form entnimmt und gegebenenfalls nacharbeitet, wobei die Polyurethanreaktionsmischung erhältlich ist durch Vermischen der Komponenten eines Polyurethansystems nach Anspruch 1 bis 4.

7. Verfahren nach Anspruch 6, **dadurch gekennzeichnet, dass** die Formtemperatur kleiner als 110 °C ist.

8. Verfahren nach Anspruch 6 oder 7, **dadurch gekennzeichnet, dass** die Form in Schritt iii. ein Dekorelement enthält.

9. Polyurethan-Sandwichteil, erhältlich nach einem Verfahren gemäß einem der Ansprüche 6 bis 8.

## Claims

1. The use of a polyurethane system, comprising
a) polyisocyanates,
b) at least one isocyanate-reactive compound,
c) at least one carboxylic salt of an amine catalyst,
d) optionally further catalysts,
e) optionally a reactive chain extender having at least two groups reactive toward isocyanates, where at least one group reactive toward isocyanates is a free, primary NH₂ group, and
f) optionally further additives,
for the production of polyurethane sandwich components, where the polyurethane sandwich components comprise a core layer, and the polyurethane sandwich components obtain a three-dimensional shape via compression of the core layer, and
where, based on one equivalent of amine of the amine catalyst, from 0.5 to 1.5 equivalents of acid groups of a carboxylic acid are comprised.

2. The use according to claim 1, wherein the carboxylic acid is a dicarboxylic acid of the general formula HOOC-(CH₂)ₙ-COOH, where n is a whole number from 2 to 14.

3. The use according to claim 2, wherein the carboxylic acid is adipic acid.

4. The use according to any of claims 1 to 3, wherein the amine catalyst c) has at least one isocyanate-reactive group.

5. The use according to any of claims 1 to 3, wherein a reactive chain extender e) is comprised in the polyurethane system at from 0.1 to 10% by weight, based on the total weight of components b) to f).

6. A process for the production of polyurethane sandwich components, by
i. taking a core layer and at least one reinforcement fiber layer,
ii. applying a polyurethane reaction mixture to the reinforcement fiber layer,
iii. placing the component from ii. into a mold, and giving the component from ii a three-dimensional shape by compressing the core layer in the mold, and hardening the polyurethane reaction mixture,
iv. removing the molding from the mold and optionally subjecting it to further operations, where the polyurethane reaction mixture is obtainable via mixing of the components of a polyurethane system according to any of claims 1 to 4.

7. The process according to claim 6, wherein the mold temperature is below 110°C.

8. The process according to claim 6 or 7, wherein the mold in step iii. comprises a decorative element.

9. A polyurethane sandwich component, obtainable by a process according to any of claims 6 to 8.

## Revendications

1. Utilisation d'un système polyuréthane, contenant
a) des polyisocyanates,
b) au moins un composé réactif avec un isocyanate,
c) au moins un sel d'acide carboxylique d'un catalyseur de type amine,
d) éventuellement d'autres catalyseurs,
e) éventuellement un prolongateur de chaîne réactif comportant au moins deux groupes réactifs vis-à-vis d'isocyanates, au moins un groupe réactif vis-à-vis d'isocyanates étant un groupe NH₂ primaire libre, et
f) éventuellement d'autres additifs
pour la production de pièces sandwich-polyuréthane, les pièces sandwich-polyuréthane contenant une couche d'âme et les pièces sandwich-polyuréthane acquérant une forme tridimensionnelle par compression de la couche d'âme et
0,5 à 1,5 équivalent de groupes acides d'un acide carboxylique étant contenus pour un équivalent d'amine du catalyseur de type amine.

2. Utilisation selon la revendication 2, **caractérisée en ce que** l'acide carboxylique est un acide dicarboxylique de formule générale HOOC-(CH₂)ₙ-COOH, n étant un nombre entier valant de 2 à 14.

3. Utilisation selon la revendication 2, **caractérisée en ce que** l'acide carboxylique est l'acide adipique.

4. Utilisation selon l'une quelconque des revendications 1 à 3, **caractérisée en ce que** le catalyseur de type amine c) comporte au moins un groupe réactif avec un isocyanate.

5. Utilisation selon l'une quelconque des revendications 1 à 3, **caractérisée en ce qu'**un prolongateur de chaine réactif e) est contenu à raison de 0,1 à 10 % en poids, par rapport au poids total des composants b) à f), dans le système polyuréthane.

6. Procédé pour la production de pièces sandwich-polyuréthane, dans lequel
i. on dispose au préalable une couche d'âme et au moins une couche de fibres de renfort,
ii. on applique sur la couche de fibres de renfort un mélange réactionnel polyuréthane,
iii. on introduit la pièce de ii dans un moule, on donne une forme tridimensionnelle à la pièce de ii par pressage de la couche d'âme dans le moule et on fait durcir le mélange réactionnel polyuréthane
iv. on retire du moule la pièce moulée et éventuellement on la travaille encore,
le mélange réactionnel pouvant être obtenu par mélange des composants d'un système polyuréthane selon l'une quelconque des revendications 1 à 4.

7. Procédé selon la revendication 6, **caractérisé en ce que** la température du moule est inférieure à 110 °C.

8. Procédé selon la revendication 6 ou 7, **caractérisé en ce que** le moule dans l'étape iii est un élément de décor.

9. Pièce sandwich-polyuréthane, pouvant être obtenue conformément à un procédé selon l'une quelconque des revendications 6 à 8.
